(19) Europäisches Patentamt

European Patent Office

Office européen des brevets

(11) **EP 3 985 767 A1**

(12) **EUROPEAN PATENT APPLICATION**

(43) Date of publication:
**20.04.2022 Bulletin 2022/16**

(21) Application number: **21461604.7**

(22) Date of filing: **12.10.2021**

(51) International Patent Classification (IPC):
*H01M 8/0282* (2016.01)    *C04B 35/00* (2006.01)
*C03C 8/16* (2006.01)    *C03C 8/18* (2006.01)
*C03C 8/20* (2006.01)    *C03C 14/00* (2006.01)
*C03C 8/02* (2006.01)

(52) Cooperative Patent Classification (CPC):
**H01M 8/0282; C03C 8/02; C03C 8/16; C03C 8/18; C03C 8/20; C03C 14/004; C04B 35/00;**
C03C 2214/08; C03C 2214/20; H01M 2008/1293; Y02E 60/50

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.10.2020 PL 43566420**

(71) Applicant: **Instytut Energetyki - Instytut Badawczy 01-330 Warszawa (PL)**

(72) Inventors:
• **Zurawska, Agnieszka**
 **04-384 Warszawa (PL)**
• **Kosiorek, Magdalena**
 **07-100 Wegrów (PL)**
• **Skrzypkiewicz, Marek**
 **05-126 Nieporet (PL)**
• **Kupecki, Jakub**
 **03-982 Warszawa (PL)**

(74) Representative: **Bury, Marek**
**Bury & Bury**
**ul. Przyczolkowa 124**
**02-968 Warszawa (PL)**

(54) **METHOD OF PREPARATION OF AN INTERMEDIATE PRODUCT, INTERMEDIATE PRODUCT, AND METHOD OF MANUFACTURING A GASKET**

(57)     A method of preparation of an intermediate product for manufacturing a gasket, constituting a paste comprising a powdered sealing material, a solvent, a binder and a plasticizer, according to the invention is characterized by the use of from 50 to 80% by volume powdered sealing material in relation to the volume of the solvent, from 1 to 15% by weight of the binder in relation to the mass of the powdered sealing material, from 1 to 20% by weight of the plasticizer in relation to the mass of the powdered sealing material. While preparing the intermediate product, the solvent is mixed with the binder and the plasticizer until achieving homogeneity. Then the powdered sealing material is added, after what it is mixed again until achieving homogeneity.

The invention concerns also an intermediate product and a method of manufacturing a gasket with the use of this intermediate product.

Fig. 3

**EP 3 985 767 A1**

**Description**

The invention concerns a method of preparation of an intermediate product, an intermediate product and a method of manufacturing of a gasket for a device with layered construction.

Numerous technical devices in which heat or mass exchange occurs or processes requiring large, i.e. extended surface, such as catalytic or electrochemical processes, are advantageously to be manufactured as layered structures. The layered structure advantageously consists of repeating groups of elements, which are arranged as subsequent elements with similar or identical structure. Such arrangement allows for including in a compact way a significant surface in a small volume, which is required by a given process, e.g. chemical, electrochemical, heat, filtration. Simultaneously, a minimization of the used volume is provided as well as advantageous, more homogenous distribution of reagents, minimization of heat (loss) exchange surface with surroundings, facilitation of current collection in electrochemical devices such as e.g. fuel cell stacks or electrolyzers. In a case of devices for mass exchange, for example in filters serving for separation of suspended particles, the layered arrangement allows for increasing the surface on which processes of substances separation occurs, advantageously in various states of matter.

Connecting the layers of this type in devices is carried out by means of: mechanical resistance welding, soldering, welding, bending, gluing, manufacturing of electrochemically drilled monoblocs, using of interlayer gaskets and mechanical pressure as well as other techniques. There are problems associated with listed techniques connected with the necessity of high volume production (mechanical resistance welding, welding, bending), a necessity of engagement of a specialized staff making given connections (welding) or significant material waste (cutting of compression gaskets or electrical discharge machining). Furthermore, using of the sealings allows for filling some spaces in a layered device, by directing the fluid flow (of gases or liquids) in a chosen direction, as well as flow of the mixture of the fluid with suspended particles. In high-temperature devices, such as solid oxide cells stacks, significant features of the sealing are: thickness, gas tightness, mechanical strength, resistance (electrical insulation), possibility of shaping of geometry, as well as precision and labour intensity of its manufacturing, which are significantly influenced by minimization of waste during the manufacturing. In the high-temperature devices, the geometry of the sealings is shaped in a way deprived of notches, advantageously by rounding of internal and/or external corners, in order to eliminate stresses appearing as a result of increase of the working temperature of the sealing above ambient conditions. Such solution is used in a case of shapes of sealings with cross-sections other than circular and oval, typically for the geometry of sealings corresponding to cuboids, rhombuses, rectangles, polygons and sealings with geometry having at least one acute, right or obtuse angle.

For example, a correct sealing is necessary e.g. in order to make a stack or other arrangement of many electrochemical cells, in particular solid oxide cells (SOC). Due to the working conditions, it is necessary to use high-temperature sealings between repetitive packs of single cell and stack and gaseous manifolds, responsible for supplying of reagents to a fuel part and an air part of the SOC cell stack. Due to high working temperature of SOC cells (450-1000°C), as well as presence of high reducing and oxidizing reagents (fuel at the one side, whereas air or oxygen at the other side) and necessary electrical insulation of the sealings, the sealing material must keep its properties in a wide range of working temperatures and it must be characterized by numerous physical and chemical properties. Additionally, in a case of mismatch of the thermal expansion coefficient of the sealing with a thermal expansion coefficient of ceramic materials present in a SOC cell and steel used as a material of an interconnector and a separator, the sealings used so far in the SOC cell stack are impermanent.

Conventional sealings do not perform particularly well in SOC cell stacks. Due to that, dedicated sealings are manufactured, which are stable in wide range of partial pressure of the components of gases and they are chemically compatible with other materials of SOC cell stack.

The material which is used most often for manufacturing the sealing of the SOC cell stack is glass, which at the working temperature is liquid with high viscosity (glass softens at working conditions of the stack). Such glass must fulfill a range of requirements, in particular its glass transition temperature Tg has to be slightly lower than a working temperature of cell, as well as softening temperature should be relatively low, so that the glass will connect well the sealed elements and will not flow out beyond the area of the sealing during stack work. Additionally, such glass has to be resistant to strongly reducing and oxidizing working conditions and it should not be subject to devitrification at working temperature of the electrochemical cell stack, typically in a period from one year to several years of continuous work. Glass sealing should also well moisten the elements of the cell stack without a clear response with its elements and it has to be an electrical insulator. Additional advantage of glass is that in some range it is possible to control its coefficient of thermal expansion.

Influence on thermal expansion can be obtained at the stage of synthesis of each of sealing material components in a process of sintering, crushing, milling by choosing appropriate modifying additives. For example, addition of $SiO_2$ decreases the coefficient of thermal expansion (further CTE) of synthesized material, whereas $B_2O_3$ increases the CTE of glass materials (Mahapatra M.K., Lu K., Glass-based seals for solid oxide fuel and electrolyzer cells - A review, Materials Science and Engineering: R: Reports, 67, 5-6, 2010, 65-85). Additionally, the choice of proportions of sealing material components, e.g. addition of reinforcing phase in a form of ceramic powder, metal powder, metal oxide, polymer powder influences the value of CTE. For example, addition (10-20% by weight) of zirconium oxide powder to the matrix of the glass BCAS type (based on oxides of barium, calcium, aluminum and silicon) slightly decreases the value of CTE (Heydari F., Maghsoudipour A., Ostad Shabani M., Hamnabard Z., Farhangdoust S., The effect of zirconia nanoparticles addition on thermal and electrical properties of BaO-CaO-Al2O3-B2O3-SiO2 glass for solid oxide fuel cell sealant, Journal of Ceramic Processing Research, 15, 1, 2014, 35-43). In turn the addition (10% by weight) of zinc oxide to the glass matrix on the basis of BaBS (based on oxides of barium, boron and silicon) decreases the value of CTE even by up to half the value (Nattapol L. Jiratchaya A., BaO-Al2O3-SiO2-B2O3 Glass-Ceramic SOFCs Sealant: Effect of ZnO Additive, Key Engineering Materials, 751, Trans Tech Publications, 2017, 455-460). In turn the addition (3-15% by weight) of aluminum oxide powder to the matrix BiBaSi (based on bismuth, barium and silicon oxides) also decreases CTE, however this decrease is lower than in a case of zinc oxide (Tong J., Han M., Singhal S. C., and Gong Y., Influence of Al2O3Addition on the Properties of Bi2O3-BaO-SiO2-RxOy(R=K, Zn, etc.) Glass Sealant," Journal of Non-Crystalline Solids, 358, 6-7, 2012, 1038-1043). The proportion and the type of the addition to the matrix should be chosen individually to the application, advantageously by matching the coefficient of thermal expansion of the sealing to the coefficient of thermal expansion of sealed elements.

Forming of gaskets with target shapes from sealing material, comprising conventionally glass powder can take place by means of many methods, depending on limitations of construction of SOC stack. In a case of stack construction, using corrugated (wavy) interconnectors made with pressing technique and other metallic elements, manufacturing of the gaskets is carried out with the use of tape casting method. The method allows obtaining thin elastic tape, from which gaskets with target shape are cut. The glass tape can be laminated (connected) with the support material such as micanite, phlogopite, graphite, muscovite, vermiculite, cellulose paper, ceramic paper, metal grid, mat or carbon, glass, aramid fabric, foamed metal, metal sheet with embossing or openings playing a mechanical and constructing function, creating a hybrid multilayered gasket, composed of alternately arranged layers of glass and supporting material, wherein the glass layers as a rule constitute outer layers, abutting directly to the sealed surface.

A first stage of a manufacturing process of a glass gasket is preparing a stable ceramic suspension, consisting of the glass powder, organic or non-organic additives and a dispersing medium. In the next stage the suspension is subjected to degassing, because gas bubbles comprised in it can result in creation of defects of raw tape. Such prepared suspension is casted on a special polyester substrate, with automatically moved cutting knife (doctor blade), which simultaneously determines the thickness of casted film. The next stage is drying, after which the raw film is ready to be removed from the substrate, transported and cut of the given shape of the gasket or laminated with the support material for creating a hybrid gasket.

Disadvantages of such solution include significant material waste, in particular glass powder, lack of possibility to turn cut-off waste from the target shape to the reproduction in a case of the hybrid sealings. The gasket is cut from a rectangular sheet and remaining waste is of various shapes. This material is hard to recycle. A significant disadvantage is also time-consuming manufacturing of a raw gasket (subsequent stages: casting, drying, lamination, cutting) and time-consuming placing of the gasket in the stack during procedure of stack assembly, due to precise positioning of the gasket in relation to the substrate and easiness of mechanical damage of the raw gasket.

Those disadvantages constituted a motivation for changing gaskets manufacturing techniques and manufacturing target shapes directly on the stack elements by application of intermediate products in a process analogous to printing.

In an European Patent number EP2765153 entitled "Sealing glass composition and methods of applying it" describing the method of seals manufacturing by means of screen printing, the composition of an intermediate product for manufacturing a seal on a basis of glass powder is disclosed. The screen printing partially solves a problem of material waste during manufacturing of sealings from the intermediate product in a form of a paste on a basis of a powder from sealing material but it involves a number of limitations. For example the deposited layer is very thin, so the process of screen printing usually has to be repeated many times to obtain a desired thickness. Additionally, the screen printing can be used only for application of the seal shape on flat elements (it excludes any constructions of devices with corrugated elements requiring the sealing). Additionally screen printing requires preparing a form (screen) for each shape and thickness of the layer of the seal, what hinders prototyping and design changes.

In the American patent number US8968509 entitled "Methods and devices for printing seals for fuel cell stacks" a conception of application of sealings in a process of squeezing a paste through a nozzle is disclosed. However it is not disclosed, how the paste suitable for a precise printing and simultaneously allowing to obtain a sealing fulfilling predefined requirements should be achieved. To obtain a sufficient precision, a stencil of appropriate shape is applied directly to an element of a stack, and then the paste or glass mass fills the empty spaces of geometry corresponding to empty fields in stencil. As a consequence, using the solution according to US8968509 involves similar inconveniences as using screen printing. Various devices for squeezing the paste and heating it are disclosed also in Korean patent applications number KR20200061122A, KR20190045618A, KR20190045622A, KR20190045621A, KR102038603B1.

In the state-of-the-art there is a lack of possibility of sufficiently precise gasket manufacturing in layered devices, allowing reduction of material waste and increasing speed and precision of positioning gaskets, which are subjected to the exposure to extreme thermal, electrical or chemical conditions.

The objective of the invention is to solve the aforementioned problem.

A method of preparation an intermediate product for manufacturing a gasket, constituting a paste comprising a powdered sealing material, a solvent, a binder and a plasticizer, according to the invention is characterized in that it is used from 50 to 80% by volume of the powdered sealing material in relation to the volume of the solvent, from 1 to 15% by weight of the binder in relation to the mass of the powdered sealing material, from 1 to 20% by weight of the plasticizer in relation to the mass of the powdered sealing material. By preparing the paste, the solvent is mixed with the binder and the plasticizer until achieving homogeneity. Then the powdered sealing material is added and such composition is mixed again until achieving homogeneity. A resultant intermediate product is characterized with high shear thinning effect defined by a dynamic viscosity difference of the intermediate product in the lowest ranges of a shear rate, so up to $0.1\frac{1}{s}$ in relation to the higher ranges of the shear rate, so above $25\frac{1}{s}$. The intermediate product is suitable for applying in 3D printing advantageously in a single-layer or in a multi-layer with a stage of drying of the previous layer, preceding applying the subsequent one.

Advantageously the solvent is mixed with the binder and the plasticizer in a planetary mill with a rotational speed falling within a range of 100 to 1000 rpm for a time falling within a range of 600 s to 90 000 s. In most cases this is sufficient for obtaining homogeneity.

Advantageously, mixing after adding the powdered sealing material is carried out in the planetary mill with the rotational speed falling within a range of 100 to 1000 rpm for a time falling within a range of 600 s to 90 000 s. In most cases this is sufficient for obtaining homogeneity.

Advantageously, the powdered sealing material comprises glass. Glass is characterized by the stability of the parameters in the wide range of temperatures.

Advantageously, the powdered sealing material comprises a ceramic material. Addition of the ceramic material, e.g. zirconium oxide allows to obtain higher mechanical strength.

Advantageously, the powdered sealing material comprises metal. Addition of metal allows for obtaining higher thermal and electrical conductivity or higher mechanical strength. Additionally, metal at the temperature of the heat treatment of the gasket can be melted and connected with spatially distributed powder into a compact, three-dimensional structure with remaining components of the gasket.

An intermediate product for manufacturing a gasket, constituting a paste comprising a powdered sealing material, a solvent, a binder and a plasticizer, according to the invention is characterized in that it comprises from 50 to 80% of the powdered sealing material in relation to the volume of the solvent, from 1 to 15% by weight of the binder in relation to the mass of the powdered sealing material, from 1 to 20% by weight of the plasticizer in relation to the mass of the powdered sealing material. Such intermediate product has a consistency which facilitates applying with a nozzle in a process of 3D printing.

Advantageously, the powdered sealing material comprises glass and/or ceramic material and/or metal.

The method of manufacturing a gasket, in particular for a device with a layered construction, including applying the shape of the gasket from a paste comprising a powdered sealing material, a solvent and a plasticizer, according to the invention is characterized in that the paste constitutes an intermediate product according to the invention. Applying the shape of the gasket is carried out by a controllable nozzle, movable in at least two dimensions, provided with an outlet opening having a cross-section surface falling within a range of 0.3 mm$^2$ to 25 mm$^2$. Then the gasket is subjected to drying.

Advantageously, during drying or after drying, the gasket is subjected to a heat treatment.

Advantageously the intermediate product is applied on a support material. This allows for obtaining hybrid gaskets, i.e. multi-layer.

Advantageously, a set of nozzles in a turret system is used.

Advantageously, a rotatable nozzle in XY plane is used in it, i.e. in the plane of the gasket.

Advantageously, a rotatable nozzle in at least one plane perpendicular to the gasket is used, i.e. in XZ plane.

Advantageously a three-axes movable nozzle is used, what allows manufacturing the spatial gaskets, gaskets on the materials with non-flat surface, e.g. wavy and it facilitates applying the gaskets in layers.

Advantageously first at least a fragment of the gasket outline is applied and then it is filled with the intermediate product.

The subject of the invention is presented by embodiments with reference to drawing, in which fig. 1 presents the outline of the gasket made in the embodiment of the method according to the invention, fig. 2 presents the outline of the gasket filled with the intermediate product in embodiment of the method according to the invention, fig. 3 presents schematically in magnification a fragment of the outline of the gasket filled with the intermediate product, fig. 4 presents the outline of the gasket filled with the product, applied on the support material, whereas fig. 5 presents tabulated exemplary shapes of the outlet cross-section of the nozzle.

According to the invention, the manufacturing of the gasket is carried out by the use of 3D printing technique, *in situ,* during the procedure of assembling the layered device, which can be for example a stack of solid oxide cells, a chemical reactor or a heat exchanger.

The first stage is preparing the appropriate intermediate product - the paste for printing on a basis of a chosen powder or mixture of powders and a chosen additive - e.g. ceramic, mineral or other. The choice of the powdered sealing material - solid phase of the gasket - is dictated by application parameters, such as coefficient of thermal expansion, softening temperature, glass transition temperature, thermal and electrical conductivity, mechanical strength. Furthermore, for obtaining desired gasket features in given application, chosen powdered sealing material, e.g. glass powder can be mixed with the ceramic (mineral) or metallic powder, creating a composite paste. Such paste is an intermediate product for manufacturing of the gasket.

**Intermediate products embodiments**

Intermediate product #1: a paste for printing gaskets of SOC stack

In the first embodiment of the intermediate product, a paste comprising 4 components was manufactured - glass powder as the powdered sealing material, a solvent, a binder and a plasticizer, respectively in amounts:

- 50% by volume of the glass powder, e.g. Schott GM31107 in relation to the volume of the organic solvent, e.g. terpineol,
- 15% by weight of the binder, e.g. polyvinyl butyral in relation to the mass of the glass powder,
- 20% by weight of the plasticizer, e.g. dibutyl phthalate in relation to the mass of the glass powder.

Also a method of preparing the paste is relevant for the properties of the intermediate product, including the order of mixing the ingredients and homogenization of the paste, which allows to obtain a uniform, stable and air bubble free paste.

In the present embodiment, the solvent was mixed with the binder and the plasticizer in a planetary mill, in a vessel with a capacity of 250 ml, with rotational speed of 200 rpm, for 2 h.

Then the glass powder was added and the paste was subjected to the homogenization by milling in the planetary mill with the rotational speed of 300 rpm for 2 h.

The intermediate product obtained in such way - the glass paste - has unique features, allowing the formation by 3D printing. The paste composition (additives to the glass powder and their amount in relation to the glass powder) determines the rheological properties of the paste, which in turn determine the possibility of precise forming.

The paste has a high shear thinning effect defined by a dynamic viscosity difference of the paste in the lowest shear rates up to $0.1 \text{ s}^{-1}$ in relation to the higher ranges of the shear rate (above $25 \text{ s}^{-1}$). The room temperature is a reference temperature. With the increase of the shear rate, the paste viscosity decreases by more than 50 times what allows for 3D printing by means of the precise nozzle.

Intermediate product #2: the paste for printing of chemical reactor gaskets

In the second embodiment an intermediate product was used:

- 80% by volume of the mixture of the glass powder Schott G018-354 and zirconium oxide stabilized by 3 moles of yttrium oxide, in the ratio by weight 4:1,
- 1% by weight of the binder - ethyl cellulose, in relation to the mass of the powdered sealing material,
- 1% by weight of the plasticizer - dioctyl phthalate - in relation to the mass of the powdered sealing material.

The solvent was mixed with the binder and the plasticizer in a ball mill with the capacity of 2 l with the rotational speed of 100 rpm for 24 h. Then the mixture of the glass powder and zirconium oxide was added and homogenization by mixing was carried out in the same mill with the rotational speed of 100 rpm for 24 h.

Intermediate product #3: the paste for printing of heat exchanger gaskets

In the third embodiment it was used:

- 70% by volume of the mixture of the glass powder Schott G018-311 and powder of ferritic steel 430 in ratio by weight 10:0.5,
- 5% by weight of the binder - carboxymethyl cellulose - in relation to the mass of the powdered sealing material,
- 10% by weight of the plasticizer - dibutyl sebacate - in relation to the mass of the powdered sealing material.

The solvent was mixed with the binder and the plasticizer using a mechanical stirrer in a vessel with a capacity of 1 l with linear velocity of the stirrer 2 m/s for 1 h. Then a mixture of glass powder and metallic powder was added and homogenization was carried out by mixing in the same vessel with the linear velocity 3 m/s for 30 min.

The intermediate product obtained by this method - composite paste - has unique features, allowing for formation through 3D printing. Furthermore, the additive of powdered metal used in the paste increases thermal conductivity of the gasket during work in final application.

Inventors noticed, that by realizing method according to the invention it is possible to obtain the intermediate product suitable for application in the process of 3D printing and having properties obtained by various additives used in different combinations known from the literature discussed in the part of the description concerning state-of-the-art.

## Embodiments of method of manufacturing of gaskets

### Embodiments of cell stack gaskets

In the first embodiment, a single-layer glass gasket was manufactured, applied on a surface of a gastight contour of a solid oxide cell, which after a process of heat treatment fills a space provided for it between the cell and a construction element of the stack abutting to it, which can be for example a steel separator, blocking the possibility of transporting gaseous substances from the one side of the cell to the second one around the edge of the cell.

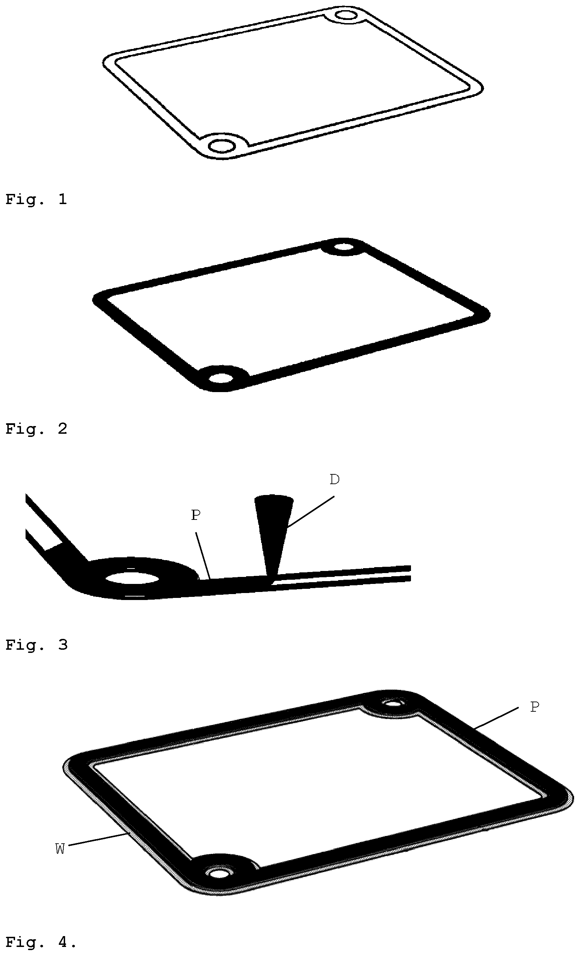

The gasket is manufactured with the use of the intermediate product in the form of the paste according to the embodiment #1 and a printer, in which in the process of printing, a nozzle with a circular ending with a diameter of 0.84 mm moves in relation to the cell or the other way round in such way, that the intermediate product which is fed from the nozzle is applied on the surface of said cell firstly in a form of the gasket outline shown in fig. 1, and then infill printed in a concentric way, as shown in fig. 2.

Appropriately selected nozzle allows to carry out the printing of a single layer, obtaining desired thickness of the raw gasket, what accelerates significantly the process of the gasket formation. Printing of subsequent layers in an additive way until obtaining the desired gasket thickness is an alternative. During tests nozzles with various cross-sections have proved to be useful, in particular circular, elliptical and rectangular with rounded corners, having dimensions of the surface area in the range of 0.3 mm$^2$ to 25 mm$^2$.

Overprint is carried out at room temperature. Then, a process of solvent evaporation - gasket drying - is carried out at room or increased temperature depending on the used solvent, in present embodiment of the intermediate product #1 - 50°C. The cell, together with the gasket formed in this way is ready for stack assembling.

In the second embodiment, double-sided printing of the glass gasket on the micanite (support material, determining the thickness of the gasket and its mechanical properties) was made, creating a hybrid gasket. Such gaskets find their application in various types of layered devices, in particular in stacks of cells. For manufacturing of such gasket, the intermediate product according to the embodiment #1 and 3D printer is used, in which a paste is fed by the nozzle with the diameter of 0.6 mm, printing given shape on the surface of the micanite constituting a support material W. First, the outline is printed by the intermediate product P, and then the infill in circular or transversal way by means of the nozzle D as shown in fig. 3 illustrating a fragment of partially made gasket. After drying process, again the analogous shape constituting a mirror image is printed at other side of the micanite. After drying process, the desired shape of the micanite is cut - flush with the edge of the gasket or cutting line is moved away from the edge of the gasket, so to facilitate the process of cutting or cause that during the plasticization, the gasket material will not spill over the support - as shown in fig. 4. Gasket obtained in such way constitutes an element ready for stack assembling.

The last stage of the gasket manufacturing is heat treatment constituting an element of the procedure of stack sealing. The temperature of sealing primarily depends on the kind of the powdered sealing material used for manufacturing of the intermediate product. For example, the intermediate product #1 on the basis of the glass powder GM31107, has the sealing temperature 700°C. The heat treatment duration depends on the number of layers repeated in the stack, i.e. on the size of the layered device. In the described embodiment, comprising at least 1 cell, the sealing time - at sealing temperature - is 2 h. A system sealed in this way comprising only glass gaskets can work in lower temperatures, because the gaskets permanently connects to the sealed components. The system sealed in this way comprising the hybrid gaskets can also work in lower temperature while providing an appropriate pressure, which value depends on the chosen support material and constructional features of the device.

### Embodiments of the reactor gasket

In the third embodiment, a double-layer composite glass-ceramic gasket is made, applied on the surface of repeatable metal element, which after the heat treatment fills the space provided for it between adjacent elements of the reactor, between which a catalytic material in a form of porous ceramic plates or granules is placed.

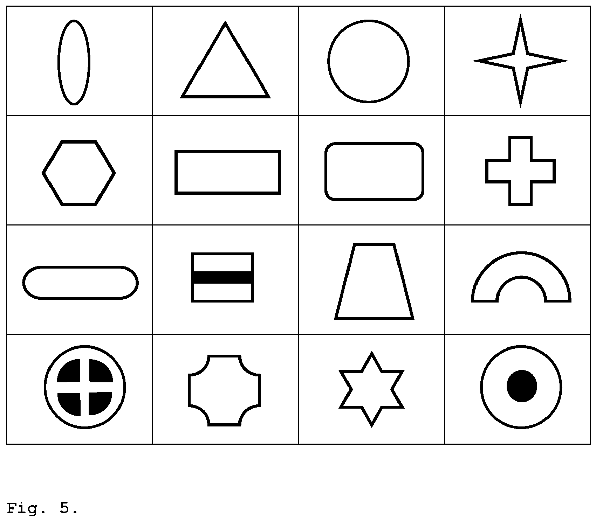

The gasket is made with the use of the intermediate product according to embodiment #2 in a form of the glass-zirconium paste and the printer provided with the rotating nozzle (with a possibility of controlling the angle of rotation of the nozzle with cross-section 1 mm x 5 mm). In the process of printing the nozzle moves in relation to the substrate or the other way round in such way, that in each turn the nozzle rotates by 90°, and the layer of the gasket is created by a single passage of the nozzle in the given area, without the necessity of printing firstly the outline and then the infill. Thanks to that it is possible to reduce the time of printing. Printing the outline firstly facilitates obtaining the high precision, but by selecting the shape and the dimensions of the nozzle to the given shape of the gasket, it is possible to carry out the printing in a single process, what allows saving time. Exemplary shapes of the nozzles are shown in table in fig. 5.

Overprint is carried out at room temperature. Then, the evaporation process of the solvent (gasket drying) is carried out at room or increased temperature (depending on the used solvent). Metal construction element comprising a gasket formed in that way is ready for assembly of the reactor.

In the fourth embodiment, the glass-ceramic gasket was made on the vermiculite constituting a support material, in double-sided printing, which resulted in obtaining a hybrid gasket.

For manufacturing of the gasket, the intermediate product according to embodiment #2 was used, in a form of the paste fed from the 3D printer, as in the third embodiment.

Given shape was printed on the vermiculite surface. After drying process, again the analogous shape constituting a mirror image is printed at other side of the vermiculite.

After drying process, the desired shape of the vermiculite is cut flush with the edge of the glass so to enforce the glass to flow out of the support layer at sealing temperature, and thus increasing the resistance of the gasket to the high pressures. The gasket made like this constitutes an element ready for assembling of a stack.

The last stage, both in the third and the fourth embodiment is heat treatment, being an element of the sealing procedure. The sealing temperature is 850°C, and the sealing time 3 h. System sealed in such way can work in lower temperature, because gaskets permanently connects to the sealed components. In a case of the hybrid gasket, while providing an appropriate mechanical pressure.

Embodiments of heat exchanger gasket

In the fifth embodiment, a gradient composite glass-metal gasket was made, applied on the surface of a repeatable metal element, which after heat treatment process fills a space provided for it between the adjacent elements.

The gasket is made with the use of the glass-metallic paste - including the intermediate product according to the embodiment #3 and the printer provided with a set of nozzles in the turret system, with the possibility to control the nozzle positioning angle in relation to the printed substrate.

The nozzles with circular endings with diameter 1 mm move in relations to the substrate or the other way round in such way, that the intermediate product fed from one nozzle constitutes a paste comprising glass powder G018-311 and steel powder 430 in relation 10:1, which is applied on the chosen surface in a form of the outline of the gasket, and then the second intermediate product is fed from the second nozzle, which constitutes a paste comprising glass powder G018-311 and steel powder 430 in relation 10:0.5 applied on the surface in a form of an infill.

The nozzle is directed perpendicularly to the substrate (angle 90°) while overprinting on the flat surface of the repeatable metal element of an exchanger. When overprinting on the non-flat surface (corrugated, cylindrical), there is a need to control the angle of the nozzle, so that the precision of printing is increased.

In the described embodiment, the metal element comprises a channel, which connects to the surface at the angle of 90°. In order to overprint a path of the gasket along the channel, the nozzle rotated at the angle of 45° in relation to the surface should be used.

Printing on the non-flat surfaces requires the possibility of rotating the nozzle in 3 axes + move of the nozzle in 3 axes x-y-z. Or, rotating the nozzle in 3 axes and a move of a table x-y-z.

Overprinting is carried out at the temperature of 30°C, in order to accelerate drying. Then, the process of the solvent evaporation (gasket drying) is carried out at the temperature increased to 60°C. Metal constructional element comprising the gasket formed in that way is ready for exchanger assembly. The last stage is a heat treatment, being the element of the procedure of sealing of the reactor. The sealing temperature is 820°C, and the sealing time 1 h. The system sealed in that way can work in lower temperature, because the gaskets permanently connect to the sealed components.

The big advantage of the invention is the fact that it allows for merging the benefits of 3D printing with the possibility of use of the powdered sealing materials - solid phase - such as glass. Thanks to that, the coefficient of thermal expansion of the target gasket can be shaped by the composition of the powder used for preparing the intermediate product for manufacturing of sealings. The invention provides a substantial freedom in the range of choice of the solid phase which includes powders such as e.g. glass powder, ceramic powder, metal powder, metal oxide, polymer powder. In present description, the volume percentage in a context of the powder refers to the actual volume.

The invention can be applied in the process of manufacturing the layered systems, e.g. a stack or other system of many planar solid oxide cells, or other electrochemical cells, in particular solid oxide fuel cells (SOFC)stacks, solid oxide electrolyzers (SOE), reversible solid oxide cells stacks working in SOFC/SOE mode (rSOC), stacks of SOFC fuelled with gaseous or liquid or solid fuel, including carbon or biochar (DC-SOFC - direct carbon solid oxide fuel cell), solid oxide fuel assisted electrolysis (SOFEC), co-electrolysis of water vapour and carbon dioxide (co-SOE solid oxide electrolyzer), stacks of SOFC fuelled directly with the internal reforming fuel (DIR-SOFC - *direct internal reforming solid oxide cell),* direct carbon assisted solid oxide electrolyzer (DC-SOFEC), reactors connecting solid oxide cells to other electrochemical cells, including solid oxide electrolyte reactor type - solid oxide cell-molten carbonate fuel cell (SOE-MCFC), and other layered systems such as reactors and heat exchangers.

## Claims

1. A method of preparation of an intermediate product for manufacturing a gasket, being a paste comprising a powdered sealing material, a solvent, a binder and a plasticizer, **characterized in that**

   for preparation there is used:

   from 50 to 80% by volume of the powdered sealing material in relation to the volume of the solvent,
   from 1 to 15% by weight of the binder in relation to the mass of the powdered sealing material,
   from 1 to 20% by weight of the plasticizer in relation to the mass of the powdered sealing material,

   wherein while preparing the paste, the solvent is mixed with the binder and plasticizer until it is homogenous, then the powdered sealing material is added, after what it is mixed again until it is homogenous.

2. Method according to claim 1, wherein the solvent is mixed with the binder and the plasticizer in a planetary mill with a rotational speed falling within a range of 100 to 1000 rpm for a time falling within a range of 600 s to 90 000 s.

3. Method according to claim 1 or 2, wherein mixing after adding the powdered sealing material is carried out in the planetary mill with a rotational speed falling within a range of 100 to 1000 rpm for a time falling within a range of 600 s to 90 000 s.

4. An intermediate product for manufacturing a gasket of a layered device, constituting a paste comprising a powdered sealing material, a solvent, a binder and a plasticizer, **characterized in that** it comprises:

   from 50 to 80% of the powdered sealing material in relation to the volume of the solvent,
   from 1 to 15% by weight of the binder in relation to the mass of the powdered sealing material,
   from 1 to 20% by weight of the plasticizer in relation to the mass of the powdered sealing material.

5. Intermediate product according to claim 4, wherein the powdered sealing material comprises glass.

6. Intermediate material according to claim 4 or 5, wherein the powdered sealing material comprises a ceramic material.

7. Intermediate material according to claim 4 or 5, wherein the powdered sealing material comprises metal.

8. A method of manufacturing of a gasket, in particular for a device with a layered structure, including applying a shape of a gasket form a paste comprising a powdered sealing material, a solvent and a plasticizer, **characterized in that**

   the paste comprises the intermediate product as described in any of claims 4 or 5 or 6 or 7, whereas
   applying the shape of the gasket is carried out by a controllable nozzle, movable in at least two dimensions, provided with an outlet opening having a cross-section surface falling within a range of 0.3 mm$^2$ to 25 mm$^2$, and then
   the gasket is subjected to drying.

9. Method according to claim 8, wherein during the drying or after the drying, the gasket is subjected to a heat treatment.

10. Method according to claim 8 or 9, wherein the intermediate product is applied on a support material.

11. Method according to claim 8 or 9 or 10, wherein a nozzle rotatable in XY plane is used.

12. Method according to claim 8 or 9 or 10 or 11, wherein a nozzle rotatable in XZ plane is used.

13. Method according to claim 8 or 9 or 10 or 11 or 12, wherein a three-axes movable nozzle is used.

14. Method according to claim 8 or 9 or 10 or 11 or 12 or 13, wherein at first at least a fragment of the gasket outline is made and then the infill of intermediate product is applied.

15. Method according to claim 8 or 9 or 10 or 11 or 12 or 13 or 14, wherein applying of the intermediate product is carried out in the temperature higher than the room temperature.

Fig. 1

Fig. 2

Fig. 3

Fig. 4.

Fig. 5.

Europäisches
Patentamt

European
Patent Office

Office européen
des brevets

# EUROPEAN SEARCH REPORT

**Application Number**

**EP 21 46 1604**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 102 386 345 B (SHANGHAI INST CERAMICS) 23 October 2013 (2013-10-23) | 1-5 | INV. H01M8/0282 C04B35/00 C03C8/16 C03C8/18 C03C8/20 C03C14/00 C03C8/02 |
| Y | * paragraph [0058]; examples 10-12 * | 6-15 | |
| X | CN 108 110 277 A (DALIAN INST CHEM & PHYSICS CAS) 1 June 2018 (2018-06-01) * paragraphs [0028] - [0058]; examples 1-4 * * paragraph [0007] * | 1-7 | |
| X | US 2016/072137 A1 (FEDERMANN DIRK [DE] ET AL) 10 March 2016 (2016-03-10) | 1-5 | |
| Y | * paragraph [0075]; example formulation 1 * | 6,7 | |
| X | JP 2005 213456 A (JSR CORP) 11 August 2005 (2005-08-11) | 1-5 | |
| Y | * paragraph [0060]; example 1 * | 6,7 | |
| Y | CN 103 496 855 B (UNIV SHANGHAI) 13 April 2016 (2016-04-13) * claim 1 * | 8-15 | |

TECHNICAL FIELDS SEARCHED (IPC)

H01M
C04B
C03C

The present search report has been drawn up for all claims

| Place of search | Date of completion of the search | Examiner |
|---|---|---|
| Munich | 4 March 2022 | Saldamli, Saltuk |

## ANNEX TO THE EUROPEAN SEARCH REPORT
## ON EUROPEAN PATENT APPLICATION NO.

EP 21 46 1604

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2022

| Patent document cited in search report | | Publication date | Patent family member(s) | | Publication date |
|---|---|---|---|---|---|
| CN 102386345 | B | 23-10-2013 | NONE | | |
| CN 108110277 | A | 01-06-2018 | NONE | | |
| US 2016072137 | A1 | 10-03-2016 | DE 102013007703 | A1 | 06-11-2014 |
| | | | DK 2991942 | T3 | 21-08-2017 |
| | | | EP 2991942 | A2 | 09-03-2016 |
| | | | US 2016072137 | A1 | 10-03-2016 |
| | | | WO 2014177125 | A2 | 06-11-2014 |
| JP 2005213456 | A | 11-08-2005 | NONE | | |
| CN 103496855 | B | 13-04-2016 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2765153 A
- US 8968509 B
- KR 20200061122 A
- KR 20190045618 A
- KR 20190045622 A
- KR 20190045621 A
- KR 102038603 B1

**Non-patent literature cited in the description**

- **MAHAPATRA M.K. ; LU K.** Glass-based seals for solid oxide fuel and electrolyzer cells - A review. *Materials Science and Engineering: R: Reports,* 2010, vol. 67 (5-6), 65-85
- **HEYDARI F. ; MAGHSOUDIPOUR A. ; OSTAD SHABANI M. ; HAMNABARD Z. ; FARHANG-DOUST S.** The effect of zirconia nanoparticles addition on thermal and electrical properties of BaO-CaO-Al2O3-B2O3-SiO2 glass for solid oxide fuel cell sealant. *Journal of Ceramic Processing Research,* 2014, vol. 15 (1), 35-43
- BaO-Al2O3-SiO2-B2O3 Glass-Ceramic SOFCs Sealant: Effect of ZnO Additive. **NATTAPOL L. ; JI-RATCHAYA A.** Key Engineering Materials. Trans Tech Publications, 2017, vol. 751, 455-460
- **TONG J. ; HAN M. ; SINGHAL S. C. ; GONG Y.** Influence of Al2O3Addition on the Properties of Bi2O3-BaO-SiO2-RxOy(R=K, Zn, etc.) Glass Sealant,. *Journal of Non-Crystalline Solids,* 2012, vol. 358 (6-7), 1038-1043